# EUROPEAN PATENT APPLICATION

(11) **EP 4 645 119 A1**
(43) Date of publication of application: **05.11.2025**
(21) Application number: 23910057.1
(22) Date of filing: 08.12.2023
(51) Int. Cl.: G06F 16/9535

(54) **CONTENT RECOMMENDATION METHOD AND APPARATUS, DEVICE, AND STORAGE MEDIUM**

(30) Priority: 27.12.2022 CN 202211689322
(71) Applicant: Beijing Zitiao Network Technology Co., Ltd., Beijing 100190 (CN)
(72) Inventor: ZENG, Zhizheng, Beijing 100028 (CN); TANG, Yuxi, Beijing 100028 (CN)
(74) Representative: Grünecker Patent- und Rechtsanwälte PartG mbB
(86) International application number: PCT/CN2023/137641
(87) International publication number: WO 2024/140127

(57) **Abstract**

The embodiment of the present disclosure provides a method and an apparatus for content recommendation, a device and a storage medium. The method includes presenting, in a content push page, a first interface element associated with a recommended content collection, the content collection being created by a first user and including a content item posted by at least one second user; and presenting, in the first interface element, information related to the content collection and at least one content item in the content collection. According to the embodiment of the present disclosure, the distribution of high-quality content collection between users may be actively promoted, the exposure amount of the content collection is improved, and users can conveniently browse high-quality content of interest and interact according to needs.

## Description

This application claims priority of Chinese Patent Application No. 202211689322.2 filed on December 27, 2022, entitled "METHOD AND APPARATUS FOR CONTENT RECOMMENDATION, DEVICE AND STORAGE MEDIUM", the entire contents of which are incorporated herein by reference.

### FIELD

Example embodiments of the present disclosure generally relate to the field of computers, and in particular, to a method and an apparatus for content recommendation, a device and a storage medium.

### BACKGROUND

Currently, more and more applications, websites and the like enable users to interact with others and share information on a network. More and more applications and websites create media content sharing modules such as short videos, images, and the like. The users can share the content shot or created by themself on the application platform, and can also browse the content shared by other users in the content push page.

### SUMMARY

**In** a first aspect of the present disclosure, a method for content recommendation is provided. The method includes presenting, in a content push page, a first interface element associated with a recommended content collection, the content collection being created by a first user and including a content item posted by at least one second user; and presenting, in the first interface element, information related to the content collection and at least one content item in the content collection.

**In** a second aspect of the present disclosure, an apparatus for content recommendation is provided. The apparatus includes a first presentation module, configured to present, in a content push page, a first interface element associated with a recommended content collection, the content collection being created by a first user and including a content item posted by at least one second user; and a second presentation module, configured to present, in the first interface element, information related to the content collection and at least one content item in the content collection.

**In** a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

**In** a fourth aspect of the present disclosure, a computer-readable storage medium is provided. The medium stores a computer program, and the computer program, when is executed by the processor, implements the method in the first aspect.

**It** should be understood that the content described in the content part of the present disclosure is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure may be implemented;
FIG. 2 illustrates a flowchart of a process for content recommendation according to some embodiments of the present disclosure;
FIG. 3A to FIG. 3F illustrate schematic diagrams of example pages for content collection recommendation according to some embodiments of the present disclosure;
FIG. 4A to FIG. 4D illustrate schematic diagrams of example pages for content collection recommendation according to some other embodiments of the present disclosure;
FIG. 5 illustrates a block diagram of an apparatus for content recommendation according to some embodiments of the present disclosure; and
FIG. 6 illustrates an electronic device in which one or more embodiments of the present disclosure may be implemented.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

In the description of the embodiments of the present disclosure, the terms "including" and the like should be understood as "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

Herein, unless explicitly stated, performing one step "in response to A" does not imply that this step is performed immediately after "A", but may include one or more intermediate steps.

It may be understood that the data involved in the present technical solution (including but not limited to the data itself, the obtaining or use of the data) should follow the requirements of the corresponding laws and regulations and related regulations.

It can be understood that, before the technical solutions disclosed in the embodiments of the present disclosure are used, the types, the usage scope, the usage scenario of personal information related to the present disclosure and the like should be notified to the user in an appropriate manner according to the relevant laws and regulations, and the authorization of the user should be obtained.

For example, in response to receiving an active request from a user, prompt information is sent to the user to explicitly prompt the user that the requested operation will need to obtain and use personal information of the user, so that the user can autonomously select whether to provide personal information to software or hardware executing the operation of the technical solution of the present disclosure according to the prompt information.

As an optional but non-limiting implementation, in response to receiving an active request from the user, a way of sending prompt information to the user may be, for example, a pop-up window, and prompt information may be presented in a form of text in the pop-up window. In addition, the pop-up window may further carry a selection control for the user to select "agree" or "not agree" to provide personal information to the electronic device.

It may be understood that the foregoing notification process and obtaining a user authorization process are merely illustrative, and do not constitute a limitation on implementations of the present disclosure, and other ways of meeting related laws and regulations may also be applied to implementations of the present disclosure.

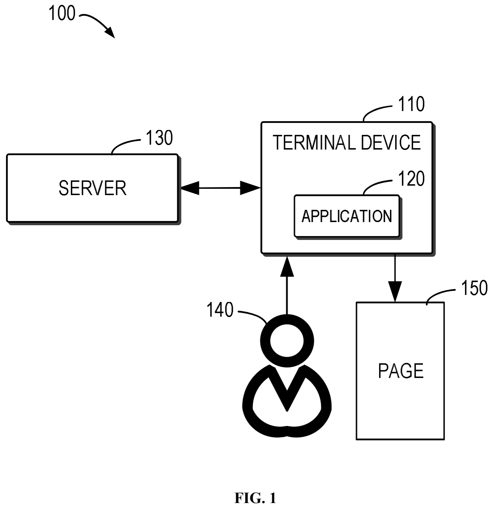

FIG. 1 illustrates a schematic diagram of an example environment 100 in which embodiments of the present disclosure may be implemented. In this example environment 100, an application 120 is installed in a terminal device 110. The user 140 may interact with the application 120 via the terminal device 110 and/or an attachment device of the terminal device 110. The application 120 may be a social application (for example, a content sharing application), or may be any other suitable application.

In environment 100 of FIG. 1, terminal device 110 may present page 150 of application 120 if application 120 is active. The page 150 may include various pages that the application 120 can provide, such as a personal homepage, a content push page, a content authoring page, a content posting page, a message page, and so forth. Via the corresponding page, the application 120 can provide the user 140 with one or more services related to the media content, including creation, posting, browsing, commenting, forwarding, etc. of the media content. As used herein, "media content" includes one or more types of content, such as images, image sets, videos, animated images, audio, text, and the like.

In some embodiments, terminal device 110 communicates with server 130 to enable provisioning of services to application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 can also support any type of interface for a user (such as a "wearable" circuit, etc.). The server 130 may be various types of computing systems/servers capable of providing computing power, including, but not limited to, mainframes, edge computing nodes, computing devices in a cloud environment, and the like.

It should be understood that the structures and functions of the various elements in the environment 100 are described for illustrative purposes only and do not imply any limitation to the scope of the present disclosure.

Multiple pages presented in an application are used to present various information to a user. In the content push page, the users can browse content shared by themselves and other users. In addition to browsing content, users are also supported to create a collection to collect content they like and want to continue to view. Different collections may provide a summary of certain content. In order to view the collection, it is generally necessary to go into the personal homepage of the collection creator for searching.

According to an embodiment of the present disclosure, a solution for content recommendation is provided. According to the solution of the embodiment of the present disclosure, a specific content collection is actively recommended in the content push page, and the information related to the content collection and at least one content item in the content collection can be specifically presented. In this way, the distribution of high-quality content collection between users may be actively promoted, the exposure amount of the content collection is improved, and users can conveniently browse high-quality content of interest and interact according to needs. Further, interaction behaviors such as higher exposure, browsing, attention and the like of the content collection can also motivate the user to create more high-quality collections to form a virtuous cycle of content creation.

Some example embodiments of the present disclosure will be described below with continued reference to the accompanying drawings.

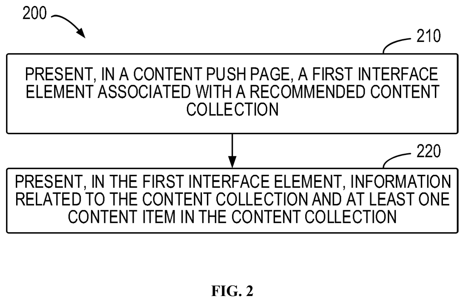

FIG. 2 illustrates a flowchart of a process 200 for content recommendation according to some embodiments of the present disclosure. Process 200 may be implemented at terminal device 110. For ease of discussion, the process 200 will be described with reference to the environment 100 of FIG. 1.

At block 210, the terminal device 110 presents, in the content push page, a first interface element associated with the recommended content collection.

In some embodiments, the terminal device 110 is provided with an application 120, which can provide functions such as browsing, commenting, forwarding, authoring and posting of content. The content push page may be a page provided by the application 120. In some embodiments, the content pushing page may also be a website page provided by a browser. In the following, for convenience of discussion, the application page is taken as an example for description.

A content push page refers to a page used to push a content stream. In some embodiments, a user may be allowed to switch the pushed content through a switching operation in the content push page. For example, if an upward sliding operation or a downward sliding operation of the user is detected, the presented content may be switched in the content recommendation page. In some embodiments, the content pushed in the content push page may be various types of media content provided based on the content recommendation policy. Such a content push page may be referred to as a content recommendation page, or a recommendation page. The recommendation page provides a recommendation stream, which may be understood as a media information outlet of an application or a website, and provides personalized customized content for the user. The user may enter the recommended page by selecting a tag, such as "recommend" or "push", in the presented user interface. In some embodiments, the content push page may include a non-recommended page. For example, the content push page may be a follow page that is primarily used to push content authored by a user followed by the current user of the application 120. For another example, the content push page may also be a friend page, which is mainly used to push content authored by a user who follows each other with the current user of the application 120. In other embodiments, different applications or websites may also divide content push pages in other ways.

**In** an embodiment of the present disclosure, it is proposed to recommend content collection in a content push page. The content collection is created by a first user and includes a content item posted by at least one second user. The content item posted by the users can be aggregated under a certain content collection through a collection operation. Each content collection may include one or more content items. The first users may also collect content items posted by themselves and/or other users into a content collection. The content items collected in the content collection may include any content capable of supporting collection operations, and may be of various types. For example, the content items collected in the content collection may include work (e.g., video, images, text, etc.) that may be pushed in the content push page, materials for work authoring (e.g., music, props, special effects, etc.), and other content (e.g., merchandise) that provides access in other pages of the application or website, among others.

Generally, a content push page is mainly used to present individual content items posted by a user. However, the summary of the content contained by the content collection may also be of interest to the user. In the embodiments of the present disclosure, by recommending high-quality content collection, the user may be helped to more conveniently obtain the content of interest, and the collection creators and content creators in the collection may also be helped to promote content.

Further, at block 220, the terminal device 110 presents, in the first interface element associated with a content collection, information related to the content collection and at least one content item in the content collection. For the presentation of the content item in the content collection and the related information, the user browsing the content push page may obtain more information about the content collection.

**In** some embodiments, the first interface element associated with the content collection may include the first interface element including an interface element having a card style in the content push page. In some embodiments, the first interface element associated with the content collection may include an interface element for pushing a content item in the content push page.

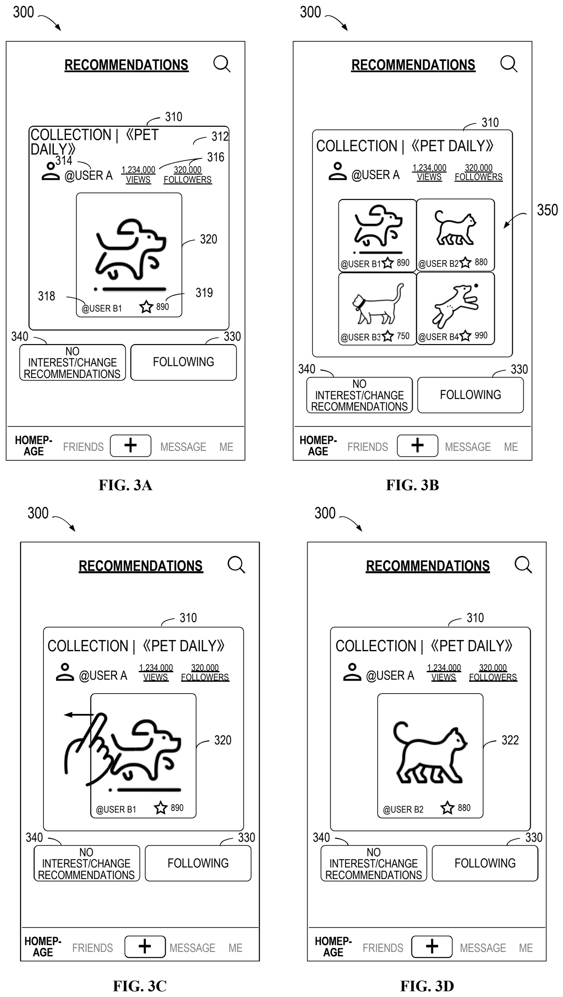

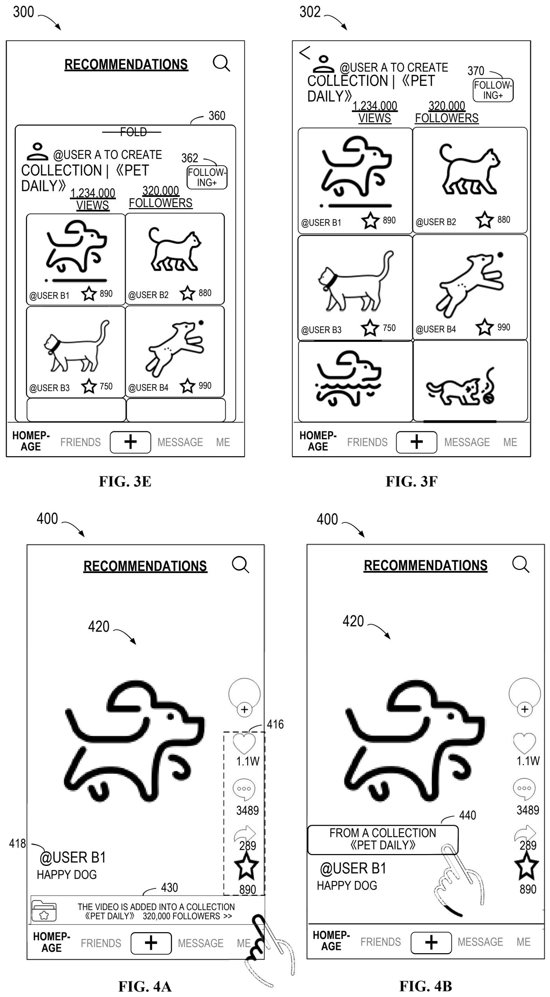

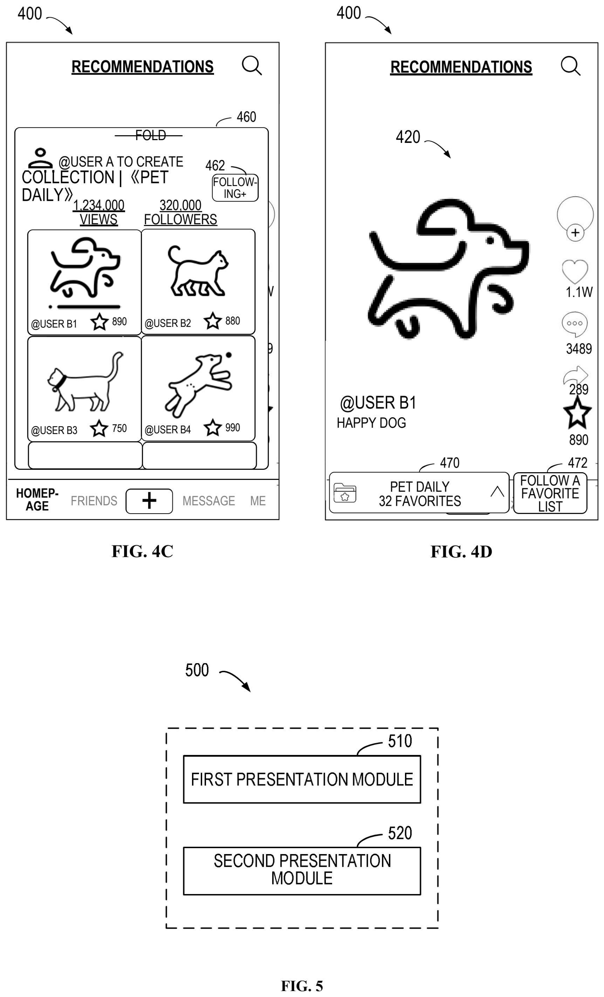

**To** better understand the example embodiments, description is made below with reference to the example page of the application. FIG. 3A to FIG. 3F and FIG. 4A to FIG. 3D illustrate example pages for content collection recommendations according to some embodiments of the present disclosure. It should be understood that the page shown in the drawings is merely an example interface, and various interface designs may actually exist. Each graphical element in the interface may have different arrangements and different visual representations, one or more elements of which may be omitted or replaced, and there may also be one or more other elements. Embodiments of the present disclosure are not limited in this respect.

**In** the example of FIG. 3A, an interface element 310 having a card style is presented in the content push page 300, the interface element 310 is associated with a particular content collection, such as "PET DAILY". Only as an example, the content push page 300 is shown as a recommendation page. The information related to the content collection and at least one content item 320 of the content collection are further presented in the interface element 310.

**In** some embodiments, the presented information related to the content collection may include identification information of the content collection, such as the name of the content collection. In the example of FIG. 3A, identification information 312 of the content collection may be presented in the interface element 310. Alternatively or additionally, the presented information related to the content collection may include identification information, such as a user name, of an author (i.e., the first user) of the content collection. In the example of FIG. 3A, the creator's identification information 314 "USER A" may be presented in the interface element 310.

Alternatively or additionally, the presented information related to the content collection may include interaction information for the content collection. The interaction information refers to related information about the interaction performed by the user with respect to the content collection. In some examples, the interaction information may indicate the number of times that the content collection is viewed, the number of times that the content collection is followed, the number of times that the content collection is liked, the number of times that the content collection is forwarded, etc. In the example of FIG. 3A, the interaction information 316 of the content collection may be presented in the interface element 310, which indicates the number of times that the current content collection is viewed and the number of times that the current content collection is followed.

Alternatively or additionally, the presented information related to the content collection may include interaction information for content items and/or identification information for second users that post the content items in the content collection. The interaction information herein refers to related information about the interaction performed by the user with respect to the favorited content item itself. In some examples, the interaction information of the content item may indicate the number of times that the content item is favorited, the number of times that the content item is followed, the number of times that the content item is liked, the number of times that content item is forwarded, the number of times that content item is loved, the number of times that content item is viewed, the number of times that content item is commented, and the like. In some embodiments, the corresponding interaction information may be presented and/or the identification information of the user may be posted in association with the content item presented in the first interface element. As shown in FIG. 3A, the content item 320 is presented in the interface element 310 and the user identification information 318 (e.g., "USER B1") posting the content item 320 and the number of times 319 that the content item 320 is favorited are presented in association with the content item 320.

**In** some examples, alternatively or additionally, the presented information related to the content collection may include interaction information for content items that are not presented and/or identification information of the users that post the content items in the first interface element in the content collection. For example, the summary of the interaction information of all content items favorited in the content collection may be presented, for example, the total number of times that all the content items are favorited. For another example, a list of users who post the content item in the content collection or identification information of users whose popularity is high may be present.

**In** addition to the information shown in FIG. 3A, other relevant information of the content collection may be presented as needed, such as the number of content items favorited in the content collection, the classification of the content in the content collection, etc., as long as the information can help to know the content collection or one or more content items therein. Of course, although some relevant information is presented in FIG. 3A and other figures below, according to actual application design requirements, one or more pieces of this information may not be presented, or other different information may be presented. In addition, specific presentation manners and positions of the information are merely examples, and may be configured according to actual design needs.

While a single content item is presented in the interface element 310 associated with the recommended content collection in the example of FIG. 3A, multiple content items may also be presented in other examples. For example, in the example of FIG. 3B, multiple content items 350 in the content collection may be presented in the interface element 310.

**In** some embodiments, when one or more of the content items in the collection are presented in the first user interface element, if the content item is dynamic content such as video, the video may be automatically played in the presentation of the first interface element. For example, in FIG. 3A, the content item 320 may be automatically played. In some embodiments, the preview of the at least one video may also be presented in the first interface element. The previewed content may be static, for example, may be a cover or a key frame of the video, or may be dynamic, for example, may be a clip of the video. For example, in FIG. 3B, covers or clips of multiple content items 350 may be presented. In this way, the user can more clearly understand the content contained in the content collection.

**In** some embodiments, the presentation of the switching of the content items favorited in the content collection is also supported in the first user interface element. If a content switching operation is detected in the first interface element, at least one further content item in the content collection may be switched from the currently presented content item in the first interface element. In some embodiments, the content switching operation may be configured to be specific operations that may be in a specific region of the first interface element, such as any suitable operation that may be a swipe operation, a multiple click operation, etc. in the region where the content item is presented. As shown in FIG. 3C, if a leftward sliding operation of the user on the content item 320 is detected, another content item 322 in the content collection may be switched to and presented, as shown in FIG. 3D. In some embodiments, for the example of FIG. 3B, it is also possible to support switching the presented content item by a particular operation (e.g., sliding operation such as left sliding or right sliding).

**In** some embodiments, in the content push page, the terminal device 110 may further present the second interface element in association with the first interface element. The second interface element supports following operations on the content collection. In response to detecting the selection operation of the current user on the second interface element, the content collection may be added to the collection follow list of the current user. Here, the current user may refer to a current logged-in user of the application 120 or a logged-in user of a website. In some embodiments, if the content collections are updated, an update notification may be sent to the users following the content collection. Through the follow behavior of the content collection, the current user can access the content collection more conveniently in the future. Moreover, in a possible case, the update notification of the collection may also be received, so that the updated favorite content can be browsed in time.

As shown in FIGs. 3A to 3D, an interface element 330 "FOLLOW" is presented in the content push page 300. If a selection operation on the interface element 330 by the current user (i.e., the user to whom the content collection is recommended) is detected, the content collection may be added to the collection follow list of the current user.

In some embodiments, other interface elements may also be presented in association with the first interface element in the content push page. For example, as shown in FIGS. 3A to 3D, an interface element 340 "NO INTEREST" or "CHANGE" is presented in the content push page 300. The interface element "NO INTEREST" may be used to label that the current user is not interested in the recommended content collection. An interface element "CHANGE" may be used to switch to and present an interface element associated with another content collection, or to present other recommended content. In response to detecting a selection operation on the interface element, a behavior corresponding to the interface element may be performed.

A first interface element having a card style is shown above with reference to FIGS. 3A to3D. In an interface element in the form of a card, content items that are favorited in the content collection are presented in an aggregated manner (e.g., presenting multiple content items at one time, or supporting a user to freely switch browsing content items). The user may obtain information of interest about the content stored in the content collection from the presented first interface element. In addition, the recommended content collection is highlighted in the form of a card, so that the user can more easily notice the attributes of the content collection themselves, and then determine subsequent operations of interest.

As previously mentioned, in addition to the interface elements of the card style, the first interface element associated with the content collection may also be interface elements used for the push of the content item. In some examples, in the interface element used for the push of the content item, if the content item presented therein is dynamic content such as a video, the content item may be automatically played, or may be played in response to a play indication of the user. FIGS. 4A and 4B illustrate such examples. In the example of FIG. 4A, the interface element 420 used for the push of the content item is presented in the content push page. The interface element 420 corresponds to a push used for a content item. Further, content items in the content collection are presented in the interface element 420. In this example, the content item is presented to the user in a form of push. For example, a user may switch to the content item in content browsing and switching. In some embodiments, unlike the collection in the form of cards described above, the favorited content item itself may be highlighted in the interface element used for the push of the content item and may indicate the content collection to which the content item is favorited.

**In** the example of FIG. 4A, in addition to the content item in the collection, information related to the collection is presented, such as the interaction information 416 of the presented content item and/or identification information 418 of the user posting the content item. In addition, related information 430 of the content collection to which the content item is favorited is also presented, for example, identification information (for example, "PET DAILY") of the content collection, interaction information (for example, 320,000 followers) of the content collection, and the like. In the example of FIG. 4B, the difference from the example of FIG. 4A is that the relevant information associated with the content collection is presented in the form of information 440, indicating the content collection to which the current content item is favorited.

In some embodiments, the details interface of the content collection may be presented if a selection operation in a predetermined region of the first interface element is detected. The specific region and operation for switching to the details interface presenting the content collection may be arbitrarily set according to actual application. Taking FIGS. 3A and 3B as an example, the details interface 360 of the content collection shown in FIG. 3E may be presented by selecting a region of the content item presented in the interface element 310. The details interface 360 can be popped up in the form of a bottom content bar, and can be fold by specific operations. More content items in the content collection may be slid up and down in the details interface 360, and interface elements 362 may also be provided. If a selection operation of the current user on the interface element 362 is detected, the current content collection may be added to the collection follow list of the current user.

**In** addition, if the selection operation on the identification information 312 of the collection presented in FIG. 3A or 3B is detected, the details page 302 shown in FIG. 3F may be switched to, and the details page 302 presents more information about the content collection in a form of a page. More content items in the content collection may be slid up and down in the details page 302, and interface elements 370 may also be provided. If a selection operation of the current user on the interface element 370 is detected, the current content collection may be added to the collection follow list of the current user.

**In** some embodiments, in the examples of FIGS. 4A and 4B, if a selection operation on the presentation region of information 430 and 440 is detected, details interface 460 of the content collection shown in FIG. 4C may be presented. The details interface 460 is similar to the details interface 360 shown in FIG. 3E, and details are not described herein again. An interface element 462 may also be provided in the details page 460, so as to add the current content collection to the collection follow list as selected by the user.

**In** some embodiments, if the details interface 460 of FIG. 4C is folded, interface elements 470 and 472 may be presented in the content push page 400. If a selection operation is detected for the interface element 470, the details interface 460 of FIG. 4C may continue to be presented or a page 302 similar to that shown in FIG. 3F may be presented. If a selection operation is detected for the interface element 472, the content collection may be added to the collection follow list for the current user.

**In** some embodiments, the presented one or more pieces of information related to the content collection may be configured to have a link. Through selection of the link, other interfaces may be switched to. In the example of FIG. 3A, if the identification information 314 of the first user who created the content collection is detected, the personal homepage of the first user may be switched to. If the identification information 318 of the second user posting the content item is detected, the personal homepage of the second user may be switched to. In some embodiments, if a predetermined operation in the predetermined region of the content push page is detected, for example, a left sliding operation in other regions except the presentation region of the content item 320, or a left sliding operation after switching to the last content item in the presentation region of the content item 320, a personal homepage of the first user may also be switched to.

Embodiments of some possible interactions in a content push page are discussed above. It may be understood that more, fewer, or different interface elements and interaction manners may also be set according to actual application design. Embodiments of the present disclosure are not limited in this regard.

**In** some embodiments, the content items presented in the first interface element presented in the content push page (e.g., content items 320, 350 in FIGS. 3A and 3B) may be content items selected based on any suitable criteria. In some examples, one or more content items favorited at the latest or earliest may be selected for presentation. In some examples, one or more content items with the highest popularity or higher popularity may be selected for presentation based on the popularities of the content items. The popularity of the content item may be determined based on the favorite popularity of the content item (e.g., the number of times that the content item is favorited) and/or other interaction popularity of the content item (e.g., the number of times that the content item is followed, the number of times that the content item is liked, the number of times that the content item is forwarded, the number of times that the content item is loved, the number of times that the content item is viewed, the number of times that the content item is commented, etc.). In some examples, one or more content items may also be randomly selected from the content collection for presentation.

**In** some embodiments, the content collection may have access permission configurations. The recommended content collection may have public access, such as if content collection is recommended into the recommended page. If the content collection is recommended on a page accessible by a specific user group, such as a follow page t or a friend page, the access permission of the content collection support at least access to a specific group of users. In some embodiments, it may be selected based on any appropriate recommendation strategy, which is not limited in the embodiments of the present disclosure.

**FIG.** 5 illustrates a schematic structural block diagram of an apparatus 500 for content recommendation according to some embodiments of the present disclosure. The apparatus 500 may be implemented or included in the terminal device 110. The various modules/components in the apparatus 500 may be implemented by hardware, software, firmware, or any combination thereof.

**The** apparatus 500 includes a first presentation module 510 configured to present, in a content push page, a first interface element associated with a recommended content collection, the content collection being created by a first user and including a content item posted by at least one second user. The apparatus 500 further includes a second presentation module 520, configured to present, in the first interface element, information related to the content collection and at least one content item in the content collection.

**In** some embodiments, the at least one content item includes at least one video. In some embodiments, the second presentation module 520 includes: an automatic playing module configured to automatically play the at least one video in the first interface element, or a preview module configured to present a preview of the at least one video in the first interface element.

**In** some embodiments, the first interface element includes an interface element having a card style in the content push page.

**In** some embodiments, the first interface element includes an interface element for pushing a content item in the content push page.

**In** some embodiments, the apparatus 500 further includes a third presentation module configured to present a second interface element in association with the first interface element; and a favorites adding module configured to, in response to detecting a selection operation of a current user on the second interface element, add the content collection into a collection follow list of the current user.

**In** some embodiments, the apparatus 500 further includes a switching module configured to, in response to detecting a content switching operation in the first interface element, present, in the first interface element, at least one further content item in the content collection.

**In** some embodiments, the information related to the content collection includes at least one of the following: identification information of the content collection; identification information of the first user; interaction information of the content collection; respective interaction information of the at least one content item in the content collection; identification information of a second user that posts the at least one content item in the content collection.

**In** some embodiments, the apparatus 500 further includes a detail presentation module configured to, in response to detecting a selection operation in a predetermined region of the first interface element, present a detailed interface of the content collection.

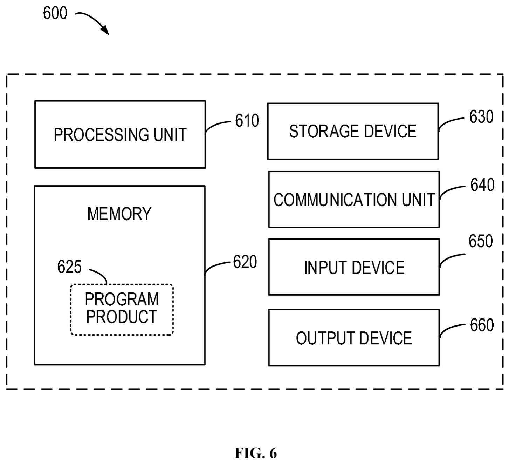

**FIG.** 6 illustrates a block diagram of an electronic device 600 in which one or more embodiments of the present disclosure may be implemented. It should be understood that the electronic device 600 illustrated in FIG. 6 is merely illustrative and should not constitute any limitation on the functionality and scope of the embodiments described herein. The electronic device 600 shown in FIG. 6 may be configured to implement the terminal device 110 in FIG. 1.

As shown in FIG. 6, the electronic device 600 is in the form of a general-purpose electronic device. Components of the electronic device 600 may include, but are not limited to, one or more processors or processing units 610, a memory 620, a storage device 630, one or more communication units 640, one or more input devices 650, and one or more output devices 660. The processing unit 610 may be an actual or virtual processor and capable of performing various processes according to programs stored in the memory 620. In multiprocessor systems, multiple processing units execute computer-executable instructions in parallel to improve parallel processing capabilities of electronic device 600.

Electronic device 600 typically includes a plurality of computer storage media. Such media may be any available media accessible to the electronic device 600, including, but not limited to, volatile and non-volatile media, removable and non-removable media. The memory 620 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 630 may be a removable or non-removable medium and may include a machine-readable medium, such as a flash drive, magnetic disk, or any other medium, which may be capable of storing information and/or data (e.g., training data for training) and may be accessed within electronic device 600.

**The** electronic device 600 may further include additional removable/non-removable, volatile/non-volatile storage media. Although not shown in FIG. 6, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 620 may include a computer program product 625 having one or more program modules configured to perform various methods or actions of various embodiments of the present disclosure.

The communication unit 640 is configured to communicate with other electronic devices through a communication medium. Additionally, the functionality of components of the electronic device 600 may be implemented in a single computing cluster or multiple computing machines capable of communicating over a communication connection. Thus, the electronic device 600 may operate in a networked environment using logical connections with one or more other servers, network personal computers (PCs), or another network node.

**The** input device 650 may be one or more input devices such as a mouse, a keyboard, a trackball, or the like. The output device 660 may be one or more output devices, such as a display, a speaker, a printer, or the like. The electronic device 600 may also communicate with one or more external devices (not shown) through the communication unit 640 as needed, external devices such as storage devices, display devices, etc., communicate with one or more devices that enable a user to interact with the electronic device 600, or communicate with any device (e.g., a network card, a modem, etc.) that enables the electronic device 600 to communicate with one or more other electronic devices. Such communication may be performed via an input/output (I/O) interface (not shown).

According to example implementations of the present disclosure, a computer-readable storage medium having computer-executable instructions stored thereon is provided, where the computer-executable instructions, when executed by a processor, implement the method described above. According to example implementations of the present disclosure, a computer program product is further provided, the computer program product being tangibly stored on a non-transitory computer-readable medium and including computer-executable instructions, the computer-executable instructions, when executed by a processor, implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce apparatus to implement the functions/ actions specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/actions specified in the flowchart and/or block diagram(s).

The computer-readable program instructions may be loaded onto a computer, other programmable data processing apparatus, or other devices, such that a series of operational steps are performed on a computer, other programmable data processing apparatus, or other devices to produce a computer-implemented process such that the instructions executed on a computer, other programmable data processing apparatus, or other devices implement the functions/actions specified in the flowchart and/or block diagram(s).

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for content recommendation, comprising:
presenting, in a content push page, a first interface element associated with a recommended content collection, the content collection being created by a first user and comprising a content item posted by at least one second user; and
presenting, in the first interface element, information related to the content collection and at least one content item in the content collection.

2. The method of claim 1, wherein the at least one content item comprises at least one video, and presenting the at least one content item comprises:
automatically playing the at least one video in the first interface element, or
presenting a preview of the at least one video in the first interface element.

3. The method of claim 1, wherein the first interface element comprises an interface element having a card style in the content push page.

4. The method of claim 1, wherein the first interface element comprises an interface element for pushing a content item in the content push page.

5. The method of claim 1, further comprising:
presenting a second interface element in association with the first interface element; and
in response to detecting a selection operation of a current user on the second interface element, adding the content collection into a collection follow list of the current user.

6. The method of claim 1, further comprising:
in response to detecting a content switching operation in the first interface element, presenting, in the first interface element, at least one further content item in the content collection.

7. The method of claim 1, wherein the information related to the content collection comprises at least one of the following:
identification information of the content collection;
identification information of the first user;
interaction information of the content collection;
respective interaction information of the at least one content item in the content collection;
identification information of a second user that posts the at least one content item in the content collection.

8. The method of claim 1, further comprising:
in response to detecting a selection operation in a predetermined region of the first interface element, presenting a detailed interface of the content collection.

9. An apparatus for content recommendation, comprising:
a first presentation module, configured to present, in a content push page, a first interface element associated with a recommended content collection, the content collection being created by a first user and comprising a content item posted by at least one second user; and
a second presentation module, configured to present, in the first interface element, information related to the content collection and at least one content item in the content collection.

10. An electronic device, comprising:
at least one processing unit; and
at least one memory coupled to the at least one processing unit and storing instructions for execution by the at least one processing unit, the instructions, when executed by the at least one processing unit, cause the device to perform the method of any of claims 1 to 8.

11. A computer readable storage medium having a computer program stored thereon, the computer program, when executed by a processor, implements the method of any of claims 1 to 8.
